# EUROPÄISCHE PATENTANMELDUNG

(11) **EP 2 133 595 A1**
(43) Veröffentlichungstag der Anmeldung: **16.12.2009**
(21) Anmeldenummer: 09007537.5
(22) Anmeldetag: 08.06.2009
(51) Int. Cl.: F16H 49/00

(54) **Getriebe zur Umsetzung von Bewegungen**

(30) Priorität: 09.06.2008 DE 102008027407
(71) Anmelder: Slongo, Joachim, Dipl.-Ing., 85049 Ingolstadt (DE)
(72) Erfinder: Slongo, Joachim, Dipl.-Ing., 85049 Ingolstadt (DE)
(74) Vertreter: Witzany, Manfred

(57) **Zusammenfassung**

Ein Getriebe (1) dient zur Umsetzung von Bewegungen. Es weist mindestens ein erstes, elastisch verformbares Zahnrad (4) auf. Dieses erste Zahnrad (4) kann radiale, oszillatorische Bewegungen ausführen und weist erste Zähne (21) auf. Diese ersten Zähne (21) kämmen mit zweiten Zähnen (22) eines zweiten Zahnrades (9). An den zweiten Zähnen (22) des zweiten Zahnrades (9) sind Steuerzähne (26) verstellbar abgestützt, um das Übersetzungsverhältnis des Getriebes (1) einstellen zu können.

## Beschreibung

Die Erfindung betrifft ein Getriebe zur Umsetzung von Bewegungen gemäß dem Oberbegriff des Patentanspruch 1.

Aus der DE 37 38 521 C1 ist ein gattungsgemäßes Planetengetriebe bekannt, welches ein außenliegendes Hohlrad und ein innenliegendes Sonnenrad aufweist. Zwischen dem Hohlrad und dem Sonnenrad ist ein elastisch verformbares Zahnrad vorgesehen, welches innenseitig mit dem Sonnenrad und außenseitig mit dem Hohlrad kämmt. Das Hohlrad, das Sonnenrad und das elastisch verformbare Zahnrad besitzen dabei unterschiedliche Zähne, so daß die Zahnungen nur an bestimmten Punkten zusammenpassen, die sich mit der Drehung der Zahnräder weiterbewegen. Auf diese Weise ergibt sich ein definiertes Übersetzungsverhältnis, welches vom Unterschied der Zähnezahl abhängt. Der Aufbau dieses Getriebes ist besonders einfach aufgebaut und kann trotzdem sehr hohe Untersetzungen realisieren.

Der Erfindung liegt die Aufgabe zugrunde, ein Getriebe der eingangs genannten Art zu schaffen, welches sich durch eine variable Einstellbarkeit des Übersetzungsverhältnisses auszeichnet.

Diese Aufgabe wird erfindungsgemäß mit den Merkmalen des Patentanspruchs 1 oder 2 gelöst.

Ein Getriebe gemäß Anspruch 1 weist mindestens ein elastisch verformbares Zahnrad auf, wobei dieses hauptsächlich biegeelastisch verformbar sein soll. Dieses erste Zahnrad kann aufgrund seiner Verformbarkeit radiale oszillatorische Bewegungen ausführen, die es mit seinen ersten Zähnen auf zweite Zähne eines zweiten Zahnrades übertragen kann. Das zweite Zahnrad kann ebenfalls elastisch verformbar sein, dies ist jedoch nicht unbedingt erforderlich. Vorzugsweise ist das zweite Zahnrad formsteif ausgebildet. Die Übersetzung dieses Getriebes wird in erster Linie durch die Flankenneigung der Zähne und die Verhältnisse der Zähnezahl bestimmt. Beide Parameter sind jedoch konstruktionsbedingt vorgegeben und damit in keiner Weise einstellbar. Um dennoch ein variables Übersetzungsverhältnis zu erzielen, sind an den zweiten Zähnen Steuerzähne verstellbar abgestützt. Diese Steuerzähne erlauben eine variable Beeinflussung der Getriebegeometrie und damit des Übersetzungsverhältnisses. Auf diese Weise läßt sich sogar eine Totpunktstellung realisieren, in dem keine Bewegung auf den Ausgang übertragen wird. Es ist sogar vorstellbar, auf diese Weise eine einstellbare Drehrichtungsumkehr zu realisieren.

Alternativ oder zusätzlich kann die gewünschte Steuerbarkeit des Getriebes gemäß Anspruch 2 auch durch ein zusätzliches Stützrad erfolgen, an dem das zweite Zahnrad abgestützt ist. Das zweite Zahnrad greift dabei am Stützrad über nicht rotationssymmetrische Eingriffsflächen an, wobei beide Räder relativ zueinander verdrehbar sind. Auf diese Weise kann das zweite Zahnrad gegen das Stützrad verspannt werden, wodurch es steifer wird. Auf diese Weise läßt sich das Übersetzungsverhältnis des Getriebes einstellen. Dabei ist lediglich eine relative Verdrehbewegung zwischen dem Stützrad und dem zweiten Zahnrad erforderlich. Diese Maßnahme kann zusätzlich zu den verstellbaren Steuerzähnen eingesetzt werden, um auf diese Weise den Bereich der abdeckbaren Übersetzungsverhältnisse zu erweitern. Es ist jedoch auch daran gedacht, das Getriebe ausschließlich durch Veränderung der Elastizität des zweiten Zahnrades einzustellen.

Um eine möglichst lineare Übertragungskurve zwischen der Verstellbewegung des Stützrades und dem Übersetzungsverhältnis des Getriebes zu erzielen, ist es gemäß Anspruch 3 günstig, wenn die Eingriffsflächen sägezahnförmig ausgebildet sind. Dabei bilden die langen Flanken der Sägezähne die Eingriffsflächen, während die kurzen Flanken in der Regel voneinander beabstandet sind.

Zweckmäßigerweise werden die Steuerzähne gemäß Anspruch 4 in Drehrichtung verstellt, so daß die Steuerzähne vom zweiten Zahnrad einen unterschiedlich großen Abstand besitzen. Auf diese Weise geht ein Teil der vom ersten Zahnrad in die Steuerzähne eingebrachten Weglänge verloren, so daß sich auf diese Weise ein entsprechend verringertes Übersetzungsverhältnis einstellt. Grundsätzlich könnten die Steuerzähne auch zusätzlich radial verstellt werden, so daß sie in jeder Stellung am zweiten Zahnrad anliegen. In den beiden Extremlagen liegen die Steuerzähne vorzugsweise am zweiten Zahnrad an, so daß das Getriebe die Bewegung entsprechend der Zahnflanken und Zähnezahlen umsetzt. Die Steuerzähne besitzen zwei Zahnflanken, von denen immer nur diejenige aktiv ist, die in etwa parallel zur Zahnflanke des zweiten Zahnrades ist, dem der Steuerzahn zugeordnet ist. Kräfte, die gegen die aktive Zahnflanke des Steuerzahnes wirken, werden konform vom Getriebe verlustfrei übertragen und führen zu entsprechenden Deformationen des elastisch verformbaren ersten Zahnrades. Die nicht aktive Zahnflanke kann dagegen keine Kräfte übertragen, da sie jeder eingehenden Kraft durch Gleiten entlang der Zahnflanke des zweiten Zahnrades ausweichen kann. Durch diesen Umstand kann auch eine Drehrichtungsumkehr des Getriebes realisiert werden, in dem die Steuerzähne soweit verstellt werden, daß sie die Rolle der aktiven und inaktiven Zahnflanke vertauschen.

Alternativ oder zusätzlich ist es gemäß Anspruch 5 günstig, die Steuerzähne verschwenkbar anzuordnen. Auf diese Weise kann der Neigungswinkel der Zahnflanke verstellt werden, was zu einer entsprechenden Beeinflussung des Übersetzungsverhältnisses führt. Allerdings muß jeder Steuerzahn einzeln verschwenkt werden, was zu einem nicht unerheblichen mechanischen Aufwand führt. Im Gegenzug dazu ist die tangentiale Verstellung aller Steuerzähne mit einem gemeinsamen Käfig möglich.

In der Regel soll daß Getriebe eine Drehbewegung in eine entsprechend über- bzw. untersetzte Drehbewegung umsetzen. Zu diesem Zweck ist es gemäß Anspruch 6 günstig, wenn das erste Zahnrad an der den Zähnen gegenüberliegenden Seite vierte Zähne aufweist, die mit dritten Zähnen eines dritten Zahnrades kämmen. Auf diese Weise wird die Drehbewegung des Motors in die oszillatorische Bewegung des ersten Zahnrades umgesetzt, die dann wieder in die gewünschte über- bzw. untersetzte Drehbewegung umgesetzt wird. Dabei spielt es grundsätzlich keine Rolle, welches der Zahnräder den Eingang und welches den Ausgang bildet. So kann der Motor auch mit dem zweiten Zahnrad verbunden werden und die umgesetzte Drehbewegung beim vierten Zahnrad abgenommen werden.

Prinzipbedingt bestünde zwischen den Zähnen während der Drehbewegung gleitende Reibung, was sich sowohl auf den Wirkungsgrad des Getriebes als auch auf dessen Betriebszeit relativ auswirken würde. Zur Vermeidung dieses Nachteils ist es gemäß Anspruch 7 vorteilhaft, wenn zwischen den Zähnen bzw. Steuerzähnen mindestens ein Wälzlager vorgesehen ist. Dieses Wälzlager weist Wälzkörper auf, die die Drehbewegung auf die folgenden Zähne über Wälzen übertragen und damit die Reibung reduziert.

Alternativ ist es gemäß Anspruch 8 günstig, die Steuerzähne selbst von Wälzkörpern zu bilden. Auf diese Weise wird ein gesondertes Wälzlager eingespart, wobei an allen Zahnflanken trotzdem ausschließlich wälzende Bewegungen vorkommen. Dies führt zu einem einfachen Aufbau des Getriebes bei hohem Wirkungsgrad und geringem Verschleiß.

Zur optimalen Anpassung der Flanken der Steuerzähne an das Wälzlager ist es gemäß Anspruch 9 günstig, wenn die Steuerzähne an der dem Wälzlager zugewandten Seite eine Kontur aufweisen, welche wenigstens im Teilbereich konkav ist. Diese Bereiche weisen einen Krümmungsradius auf, der in etwa dem doppelten des Krümmungsradius der Wälzelemente entspricht. Damit ist sichergestellt, daß sich die Wälzelemente an den Zahnflanken der Steuerzähne abwälzen können, so daß keinerlei Gleitreibung entsteht. Für den Krümmungsradius der Steuerzähne ist eine Toleranz von +/-20 % zulässig, außerhalb der bereits eine merkliche Gleitreibung einsetzt.

Um eine möglichst exakte Führung der Steuerzähne zu erreichen, ist es gemäß Anspruch 10 günstig, wenn die Steuerzähne an der dem zweiten Zahnrad zugewandten Seite passend zur Kontur der zweiten Zähne ausgebildet sind. Vorzugsweise sind die zweiten Zähne in Form von Dreieck- bzw. Trapezzähnen ausgebildet und weisen gerade Flanken auf. Entsprechend sind dann auch die Steuerzähne an der dem zweiten Zahnrad zugewandten Seite geradflankig begrenzt.

Die Steuerzähne sind gemäß Anspruch 11 vorteilhaft an der Kontur der zweiten Zähne gleitbar oder wälzbar abgestützt. Vorzugsweise wird eine gleitende Abstützung gewählt. Lediglich bei sehr großen Getrieben kann eine wälzbare Abstützung vorteilhaft sein. Zu diesem Zweck wird zwischen den Steuerzähnen und dem zweiten Zahnrad ein Wälzlager vorgesehen.

Um die Steuerzähne in ihrer Ausgangsposition zu halten, sind diese gemäß Anspruch 12 radial federnd gelagert. Die Feder ist dabei vorzugsweise schwach dimensioniert, so daß die von der Feder aufgenommene Kraft wesentlich schwächer ist als die vom Getriebe übertragene Kraft.

Insbesondere zur Realisierung eines Drehrichtungsumkehrbahngetriebes ist es gemäß Anspruch 13 günstig, wenn die dem zweiten Zahnrad zugewandten Flächen der Steuerzähne einen Winkel einschließen, der dem Winkel der Zahnflanken der zweiten Zähne entspricht. Auf diese Weise kann durch das Übersetzungsverhältnis des Getriebes durch kontinuierliches Verschieben der Steuerzähne in Drehrichtung die Drehrichtung umgekehrt werden.

Vorzugsweise schließen die dem zweiten Zahnrad zugewandten Flächen der Steuerzähne gemäß Anspruch 14 rechte Winkel ein. Dies gewährleistet eine sichere Kraftübertragung, ohne selbsthemmende Wirkung. Außerdem können auf diese Weise die Steuerzähne sehr einfach und kompakt realisiert werden, ohne daß die Gefahr besteht, daß diese innerhalb des Getriebes umkippen.

Der Erfindungsgegenstand ist nicht auf rotierendes System beschränkt. Es ist insbesondere auch daran gedacht, den erfindungsgemäßen Grundgedanken auf Lineargetriebe anzuwenden. Hierzu ist es lediglich erforderlich, mindestens eines der Zahnräder gemäß Anspruch 15 mit einem unendlichen Krümmungsradius zu versehen, so daß auf diese Weise eine Zahnstange realisiert ist. Das Getriebe kann dabei Umsetzungen von einer Drehbewegung in eine Schiebebewegung, von einer Schiebebewegung in eine Drehbewegung oder von einer Schiebebewegung in eine andere Schiebebewegung realisieren.

Der Erfindungsgegenstand wird beispielhaft anhand der Zeichnung erläutert, ohne den Schutzumfang zu beschränken.

Es zeigt:
- Figur 1: eine Längsschnittdarstellung durch ein Getriebe entlang der Schnittlinie I-I der Figur 2,
- Figur 2: einen axialen Schnitt durch das Getriebe gemäß Figur 1 entlang der Schnittlinie II-II,
- Figur 3: eine Prinzipdarstellung der Getriebesteuerung in einer ersten Endstellung der Steuerzähne in der untersten Stellung des ersten Zahnrades,
- Figur 4: die Prinzipdarstellung gemäß Figur 3 beim Entspannen des zweiten Zahnrades,
- Figur 5: die Prinzipdarstellung gemäß Figur 4 beim Spannen des zweiten Zahnrades
- Figur 6: eine Prinzipdarstellung der Getriebesteuerung in einer Neutralstellung der Steuerzähne in der unteren Endstellung des ersten Zahnrades,
- Figur 7: die Prinzipdarstellung gemäß Figur 6 in der oberen Endstellung des ersten Zahnrades,
- Figur 8: eine Prinzipdarstellung der Getriebesteeuerung in einer Mittelstellung bei Drehrichtungsumkehr und unterer Endlage des ersten Zahnrades,
- Figur 9: die Prinzipdarstellung gemäß Figur 8 beim Entspannen des zweiten Zahnrades
- Figur 10: die Prinzipdarstellung gemäß Figur 9 beim Spannen des zweiten Zahnrades
- Figur 11: eine alternative Ausführungsform des Getriebes mit stumpfwinkeliger Verzahnung,
- Figur 12: eine alternative Ausführungsform des Getriebes mit gezahnten Zahnflanken,
- Figur 13: eine alternative Ausführungsform des Getriebes mit gekrümmten Zahnflanken,
- Figur 14: eine alternative Ausführungsform des Getriebes mit Wälzkörpern als Steuerzähne,
- Figur 15: eine alternative Ausführungsform des Getriebes mit zwischengeschalteten Wälzlagern und
- Figur 16: eine alternative Ausführungsform des Getriebes mit einem Stützrad.

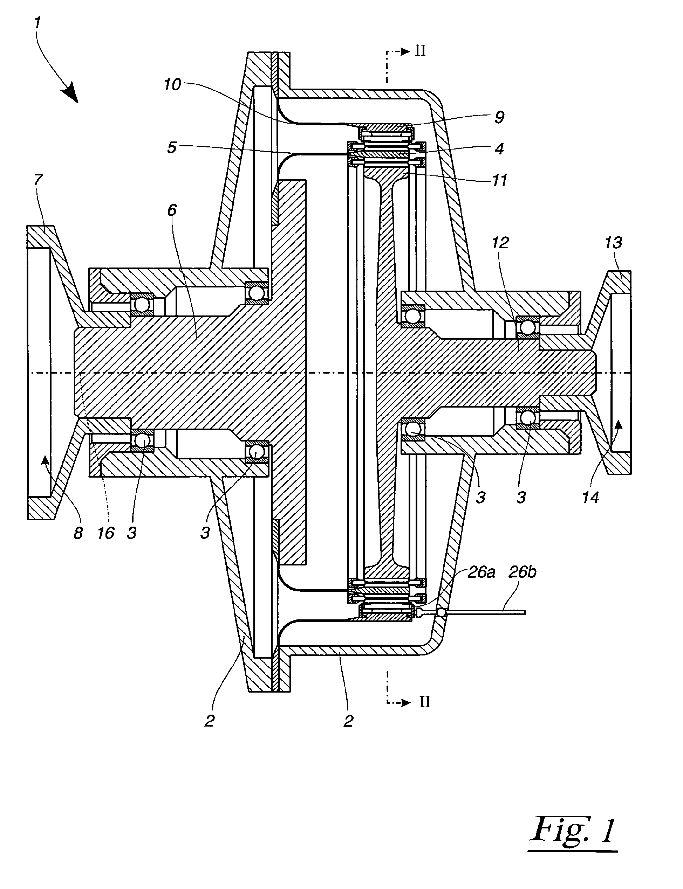

Die Figur 1 zeigt eine Längsschnittdarstellung durch ein Getriebe 1. Dieses Getriebe 1 ist in einem stationären Gehäuse 2 über Wälzlager 3 abgestützt.

Das Getriebe 1 weist ein erstes Zahnrad 4 auf, welches elastisch verformbar ist. Dieses erste Zahnrad 4 ist über eine flexible Ankopplung 5 mit eine Abtriebswelle 6 drehfest verbunden. Diese Abtriebswelle 6 steht mit einer Verbindungsmuffe 7 in Wirkverbindung, die einen Ausgang 8 des Getriebes 1 bildet.

Das erste Zahnrad 4 kämmt außenseitig mit einem zweiten Zahnrad 9, welches ebenfalls elastisch verformbar ist. Das zweite Zahnrad 9 ist über eine weitere flexible Ankopplung 10 mit dem stationären Gehäuse 2 verbunden. Auf diese Weise wird jegliche Drehbewegung des zweiten Zahnrads 9 unterbunden. Das zweite Zahnrad 9 kann sich daher nur in radialer Richtung verbiegen.

Innenseitig kämmt das erste Zahnrad 4 mit einem dritten Zahnrad 11, welches mit einer Antriebswelle 12 drehfest verbunden ist. Die Antriebswelle 12 ist mit einer weiteren Verbindungsmuffe 13 drehfest verbunden, die einen Eingang 14 des Getriebes 1 bildet.

Die Drehbewegung der Antriebswelle 12 am Eingang 14 wird direkt auf das dritte Zahnrad 11 übertragen. Das flexible erste Zahnrad 4 besitzt dabei eine vom dritten Zahnrad 11 abweichende Zähnezahl, so daß sich das erste Zahnrad 4 in radialer Richtung verformen muß, um mit dem dritten Zahnrad 11 kämmen zu können. Dabei führen einzelne Punkte des ersten Zahnrades 4 sowohl eine Drehbewegung als auch eine radial-oszillatorische Bewegung aus.

Das erste Zahnrad 4 besitzt außenseitig eine vom zweiten Zahnrad 9 unterschiedliche Zähnezahl, so daß sich hier grundsätzlich die gleichen Verformungsbedingungen wie zwischen dem ersten 4 und dritten Zahnrad 11 einstellen. Auf diese Weise wird die Drehbewegung des Eingangs 14 auf eine Drehbewegung des Ausgangs 8 übertragen.

Am zweiten Zahnrad 9 ist außerdem ein Steuerkranz 26a abgestützt. Dieser Steuerkranz 26a steht mit einem Steuerhebel 26b in Wirkverbindung, der vorzugsweise schwenkbar am Gehäuse 2 abgestützt ist. Der Steuerhebel 26b kann den Steuerkranz 26a in Drehrichtung um eine Achse 16 verstellen, um die Übertragungsfunktion des Getriebes 1 zu beeinflussen. Der Steuerkranz 26a ist wie das zweite Zahnrad 9 flexibel ausgebildet.

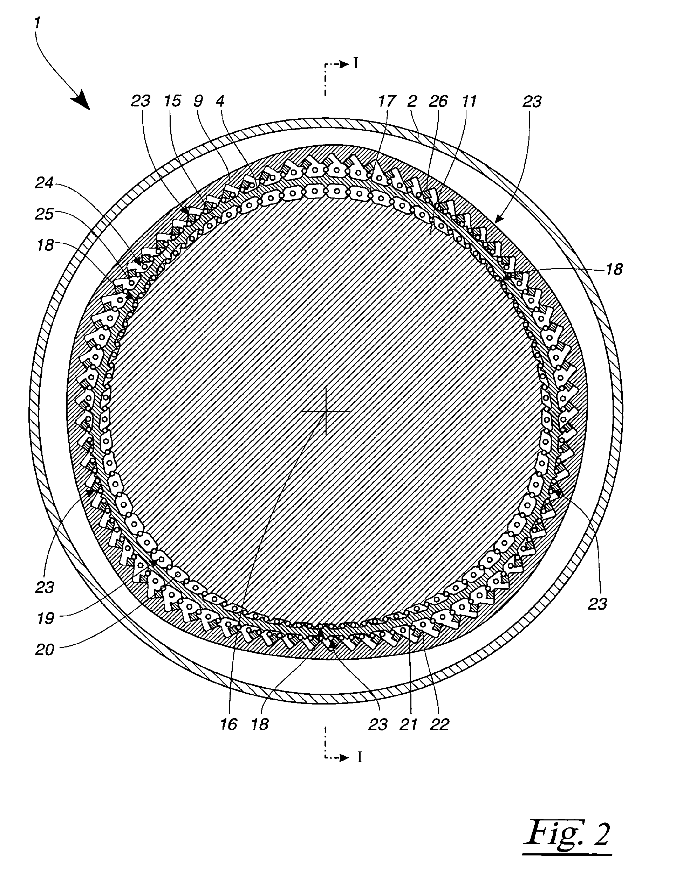

Die weitere Erläuterung des Getriebes 1 erfolgt anhand der Schnittdarstellung gemäß Figur 2. Das mit dem Eingang 14 verbundene dritte Zahnrad 11 besitzt dritte Zähne 15. Das dritte Zahnrad 11 ist dabei starr aufgebaut, so daß es ausschließlich eine Drehbewegung um die Achse 16 ausführen kann. Das erste Zahnrad 4 besitzt innenseitig vierte Zähne 17, die mit den dritten Zähnen 15 des dritten Zahnrades 11 kämmen. Die Zähnezahl beider Zahnräder 4, 11 ist dabei so bemessen, daß das erste Zahnrad 4 innenseitig drei Zähne 17 mehr als das dritte Zahnrad 11 aufweist. Durch diesen Unterschied in der Zähnezahl der Zahnräder 4, 11 gibt es drei Kongruenzpunkte 18, in denen die Zähne 17 des ersten Zahnrades 4 entsprechenden Zahnlücken des dritten Zahnrades 11 gegenüberliegen. In diesen Kongruenzpunkten 11 schmiegt sich das erste Zahnrad 4 eng an das dritte Zahnrad 11 an und kann Drehmomente und Kräfte übertragen. Zwischen den Kongruenzpunkten 18 treffen die Zähne 15, 17 der Zahnräder 4, 11 nicht exakt in die gegenüberliegenden Lücken, da die Zähnezahl beider Zahnräder 4, 11 unterschiedlich ist. Genau mittig zwischen zwei Kongruenzpunkten 18 stehen sich die Zähne 15, 17 direkt gegenüber. In diesem Bereich werden die Zahnräder 4, 11 um die Zahnhöhe auseinandergedrückt, so daß das flexible erste Zahnrad 4 eine von der Kreisform abweichende Form aufweist.

Prinzipbedingt führen die dritten 15 und vierten Zähne 17 des ersten 4 und dritten Zahnrades 11 keine Wälzbewegung durch, was zu beträchtlichen Reibungsverlusten und entsprechendem Verschleiß führen würde. Um diesem Effekt entgegenzuwirken, ist zwischen dem ersten Zahnrad 4 und dem dritten Zahnrad 11 ein Wälzlager 19 vorgesehen, welches einzelne Wälzkörper 20 aufweist. Die Wälzkörper 20 sind als Drehkörper ausgebildet, deren Drehachse zur Achse 16 parallel ist. Die konkrete Form der Wälzkörper 20 spielt nur eine untergeordnete Rolle. Grundsätzlich ist an Kugeln, Zylinder, Tonnen und Drehhyperboloide gedacht. Da die Wälzkörper 20 die gesamte Antriebsenergie übertragen müssen, sind sie einer erhöhten Belastung ausgesetzt und vorzugsweise gehärtet.

Das erste Zahnrad 4 besitzt außenseitig erste Zähne 21, die mit zweiten Zähnen 22 des zweiten Zahnrades 9 kämmen.

Auch das zweite Zahnrad 9 ist dabei flexibel ausgebildet, aber im Gegensatz zum ersten 4 und zweiten Zahnrad 11 stationär gelagert. Das zweite Zahnrad 9 führt daher keinerlei Drehbewegung aus.

Die Zähnezahlen des ersten Zahnrades 4 und zweiten Zahnrades 9 sind dabei so bemessen, daß das erste Zahnrad 4 außenseitig fünf Zähne weniger besitzt als das zweite Zahnrad 9. Damit stellen sich zwischen dem ersten Zahnrad 4 und dem zweiten Zahnrad 9 vergleichbare Bedingungen ein, wie zwischen dem ersten Zahnrad 4 und dem dritten Zahnrad 11. Aufgrund der unterschiedlichen Zähnezahldifferenz ergeben sich zwischen dem ersten Zahnrad 4 und dem zweiten Zahnrad 9 jedoch fünf Kongruenzpunkte 23, in denen die ersten Zähne des ersten Zahnrades 4 entsprechenden Zahnlücken des zweiten Zahnrades 9 gegenüberliegen. Zwischen den Kongruenzpunkten 23 ergeben sich bedingt durch die unterschiedlichen Zähnezahlen entsprechende Fehlstellungen, durch die das zweite Zahnrad 9 radial weggedrückt wird. Zwischen dem ersten Zahnrad 4 und dem zweiten Zahnrad 9 ist ebenfalls ein Wälzlager 24 mit entsprechenden Wälzkörpern 25 vorgesehen.

Um das Getriebe 1 sowohl bezüglich des Übersetzungsverhältnisses als auch im Sinne einer Drehrichtungsumkehr steuerbar zu machen, sind zwischen dem ersten Zahnrad 4 und dem zweiten Zahnrad 9 Steuerzähne 26 vorgesehen. Diese Steuerzähne 26 sind auf einem nicht dargestellten, flexiblen Träger angeordnet, auf dem sie gemeinsam in Drehrichtung verstellbar sind. Diese Steuerzähne 26 sind radial federnd im Steuerkranz 26a gehalten und gleitend an den zweiten Zähnen 22 des zweiten Zahnrades 9 abgestützt. Diese zweiten Zähne 22 haben daher nur die Aufgabe, Führungsflächen für die Steuerzähne 26 zu bilden.

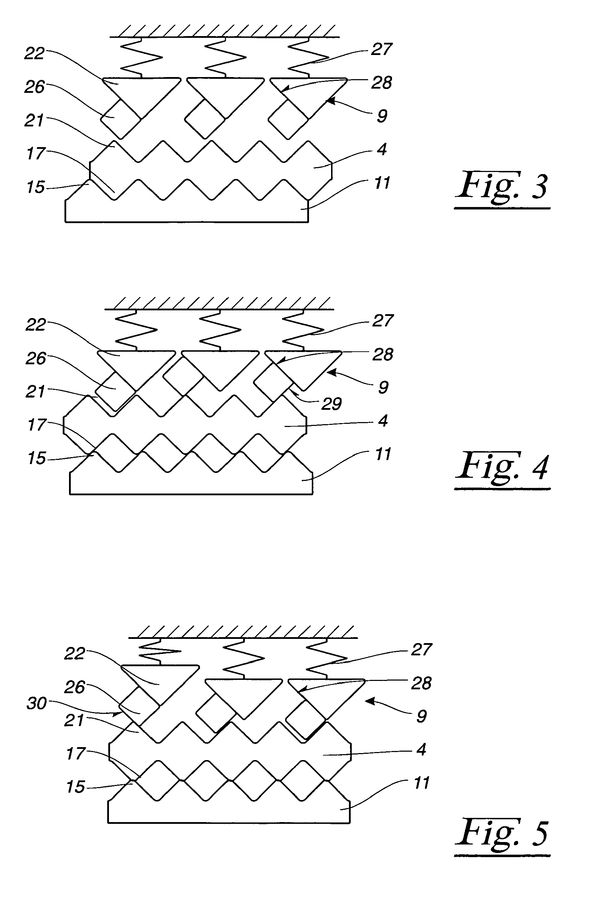

Die Arbeitsweise des Getriebes 1 gemäß den Figuren 1 und 2 erfolgt im Detail anhand der Prinzipdarstellungen gemäß den Figuren 3 bis 10. Diese Figuren zeigen nur einen kleinen Ausschnitt der Zahnräder 4, 9, 11, wobei zur besseren Übersichtlichkeit auf die Darstellung der Krümmung der Zahnräder 4, 9, 11 verzichtet wurde. Die Zahnräder 4, 9, 11 sind daher wie Zahnstangen dargestellt. Es wird außerdem angenommen, daß die einzelnen Zahnräder 4, 9, 11 eine sehr große Anzahl von Zähnen 15, 17, 21, 22 aufweisen, wobei die Differenz der Zähnezahlen dieser Zahnräder 4, 9, 11 klein sein soll. Damit sind die Zähnezahlunterschiede der Zahnräder 4, 9, 11 in den kleinen Ausschnitten mit der Figur 3 bis 10 nicht mehr zu sehen, was die Darstellungen übersichtlicher macht. Zum besseren Verständnis ist die Elastizität des zweiten Zahnrades 9 durch Federn 27 angedeutet. Von einer Darstellung der Wälzlager 19, 24 wurde zugunsten der besseren Übersichtlichkeit abgesehen.

Die Figur 3 zeigt eine Stellung des Getriebes 1 bei voll ausgelegter Steuerung. Die Steuerzähne 26 liegen in diesem Fall an Flanken 28 der zweiten Zähne 22 an. In der Darstellung gemäß Figur 3 kämmt das erste Zahnrad 4 exakt mit dem dritten Zahnrad 11. Es ist demnach die Situation in einem der Kongruenzpunkte 18 dargestellt. In dieser Lage nimmt das erste Zahnrad 4 seine tiefste Lage ein, in der es der Drehachse 16 am nächsten kommt. In dieser Lage des ersten Zahnrades 4 befinden sich dessen erste Zähne 21 außer Eingriff mit den Steuerzähnen 26, die gleitend an Zahnflanken 28 der zweiten Zähne 22 abgestützt sind.

Die Figur 4 zeigt eine Situation zwischen zwei Kongruenzpunkten 18 bei der gleichen Steuerungslage wie in Figur 3. In der in Figur 4 dargestellten Situation drücken die ersten Zähne 21 des ersten Zahnrades 4 gegen passive Flanken 29 der Steuerzähne 26. In dieser Lage werden die Steuerzähne 26 zwar durch das erste Zahnrad 4 bewegt, es wird jedoch keinerlei Kraft übertragen. Bedingt durch die gleitende Lagerung der Steuerzähne 26 an den Zahnflanken 28 der zweiten Zähne 22 können die Steuerzähne 26 der auftreffenden Kraft durch Verschiebung entlang der Zahnflanke 28 ausweichen. In diesem Punkt wird deshalb keinerlei Kraft übertragen.

Die Figur 5 zeigt die gleiche Steuerungssituation wie in den Figuren 3 und 4, wobei diesmal ein Punkt gezeigt wird, in dem die ersten Zähne 21 des ersten Zahnrades 4 aktive Flanken 30 der Steuerzähne 26 erfassen. Damit drücken die ersten Zähne 21 des ersten Zahnrades 4 derart gegen die Steuerzähne 26, daß die auftreffende Kraft senkrecht zur Zahnflanke 28 des zweiten Zahnes 22 ist. In dieser Situation können die Steuerzähne 26 der auftreffenden Kraft nicht mehr ausweichen, so daß die auftreffende Kraft in eine elastische Verformung des zweiten Zahnrades 9 umgesetzt wird. Bedingt durch diese elastische Verformung erfolgt eine Drehmomentübertragung vom zweiten Zahnrad 11 auf das erste Zahnrad 4. Diese Drehmomentübertragung ist dabei in der Gestalt, daß beide Zahnräder 4, 11 mit der gleichen Drehgeschwindigkeit und der gleichen Drehrichtung rotieren.

Nachdem über den Umfang der Zahnräder 4, 9, 11 betrachtet die Situationen gemäß den Figuren 3, 4 und 5 periodisch wiederkehren, erfolgt insgesamt ein Antrieb des ersten Zahnrades 4 vom dritten Zahnrad 11 mit gleicher Drehzahl und gleicher Drehrichtung.

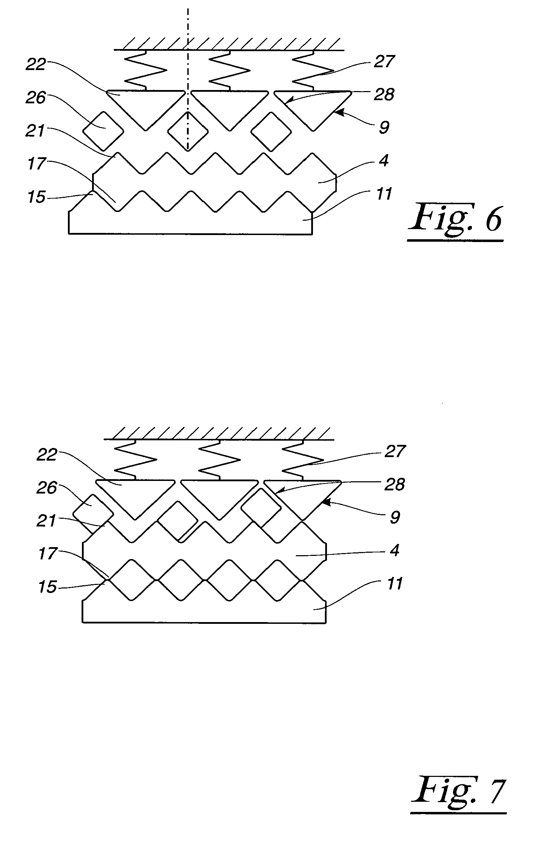

In der Figur 6 ist eine alternative Steuersituation dargestellt. Dabei befinden sich die Steuerzähne 26 genau in den Zahnlücken zwischen den zweiten Zähnen 22. Die Figur 6 zeigt wiederum die Situation im Kongruenzpunkt 18 bei tiefstliegendem erstem Zahnrad 4. Das erste Zahnrad 4 befindet sich zu den Steuerzähnen 26 außer Eingriff, so daß keinerlei Kräfte übertragen werden.

In der Figur 7 ist die Situation zwischen den Kongruenzpunkten 18 dargestellt, bei der das erste Zahnrad 4 seinen höchsten Punkt erreicht. Aufgrund der Lage der Steuerzähne 26 zwischen den zweiten Zähnen 22 können diese von den ersten Zähnen 21 des ersten Zahnrades 4 zurückgedrückt werden, ohne hierbei Kräfte zu übertragen. Dabei wird vorausgesetzt, daß die Federwirkung der Steuerzähne 26 wesentlich schwächer als die der Zahnräder 4, 9 ist. Die in den Figuren 6 und 7 dargestellte Steuerungssituation entspricht daher einer Neutralstellung, in der keine Bewegung vor Eingang 14 auf den Ausgang 8 übertragen wird.

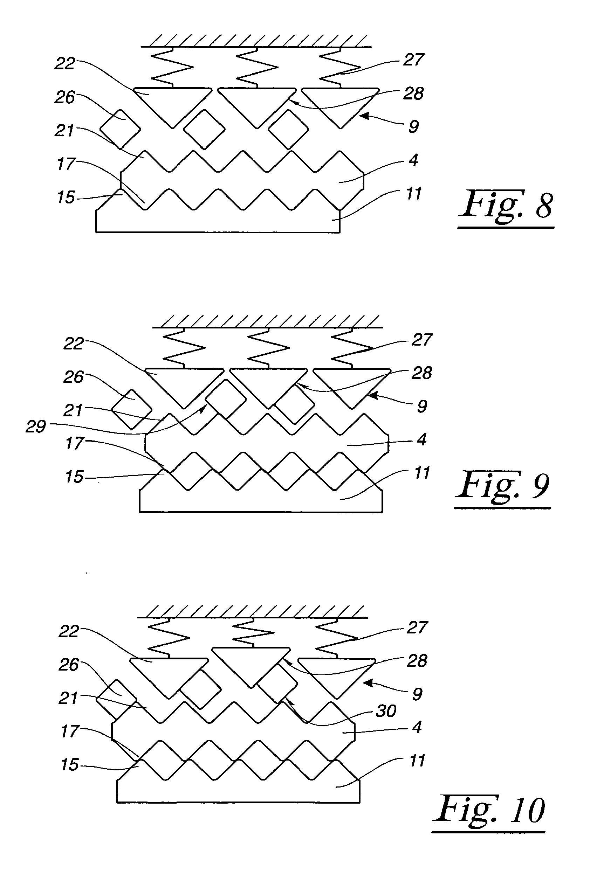

Die Figur 8 zeigt eine weitere alternative Steuerungssituation des Getriebes 1. Dabei wurden die Steuerzähne 26 über den Neutralpunkt gemäß den Figuren 6 und 7 hinaus verstellt, wobei die Extremlage entsprechend dem Spiegelbild der Figur 3 noch nicht erreicht ist. Die Figur 8 zeigt wiederum die Situation im Kongruenzpunkt 18 bei tiefster Lage des ersten Zahnrades 4. In dieser Lage befinden sich die ersten Zähne 21 des ersten Zahnrades 4 außer Eingriff mit den Steuerzähnen 26, so daß keinerlei Kraft übertragen wird.

Die Figur 9 zeigt die Situation zwischen den Kongruenzpunkten 18, wobei die ersten Zähne 21 des ersten Zahnrades 4 gegen passive Zahnflanken 29 der Steuerzähne 26 drücken. Aufgrund der gegenüber der Figur 4 veränderten Abstützung der Steuerzähne 26 sind die Rollen der aktiven 30 und passiven Flanke 29 der Steuerzähne 26 vertauscht. In der in Figur 9 dargestellten Situation werden die Steuerzähne 26 von den ersten Zähnen 21 des ersten Zahnrades 4 weggedrückt, so daß keinerlei Drehmomente übertragen werden.

In der Figur 10 ist eine Situation dargestellt, in der die ersten Zähne 21 des ersten Zahnrades 4 gegen die aktive Flanke 30 der Steuerzähne 26 drücken. Die in die Steuerzähne 26 eingeleitete Kraft ist dabei senkrecht zur Zahnflanke 28, so daß die eingeleitete Kraft zu einer Deformation des zweiten Zahnrades 9 führt. Aufgrund der gespiegelten Winkellage der aktiven Zahnflanke 30 führt dies allerdings zu einer Drehbewegung des ersten Zahnrades 4 entgegen der Drehrichtung des dritten Zahnrades 11.

Es erfolgt demnach bedingt durch die Lage der Steuerzähne 26 eine Drehrichtungsumkehr durch das Getriebe 1.

Da sich die Steuerzähne 26 in ihrer unbelasteten Lage gemäß Figur 8 nicht in Anlage an die zweiten Zähne 22 befinden, wird ein Teil der radialen Bewegung des ersten Zahnrades 4 in eine Relativbewegung zwischen dem Steuerzahn 26 und dem zweiten Zahnrad 9 umgesetzt. Dieser Weg fehlt jedoch bei der Umsetzung der Drehbewegung vom dritten Zahnrad 11 auf das erste Zahnrad 4, so daß sich das erste Zahnrad 4 mit entsprechend geringerer Geschwindigkeit als das dritte Zahnrad 11 bewegt. Das Getriebe 1 ist daher in der Stellung gemäß den Figuren 8 bis 10 drehrichtungsumkehrend und untersetzend.

Es ist klar, daß durch die Wahl der Lage der Steuerzähne 26 zwischen ihren Anlagepunkten an die zweiten Zähne 22 in seiner Drehbewegungsübersetzung stufenlos eingestellt werden kann. Der Übersetzungsbereich geht dabei von -1:1 über 0:1 bis 1:1. Dieses Getriebe kann insbesondere im Bereich nahe der Neutralstellung gemäß den Figuren 6 und 7 hohe Drehmomente übertragen, so daß es insbesondere zusammen mit Verbrennungsmotoren vorteilhaft einsetzbar ist. Nahe der Neutralstellung sind hohe Untersetzungen möglich. Während der stufenlosen Änderung des Übersetzungsverhältnisses ist keine Trennung des Kraftweges erforderlich, so daß insbesondere eine Kupplung im Kraftweg entfallen kann.

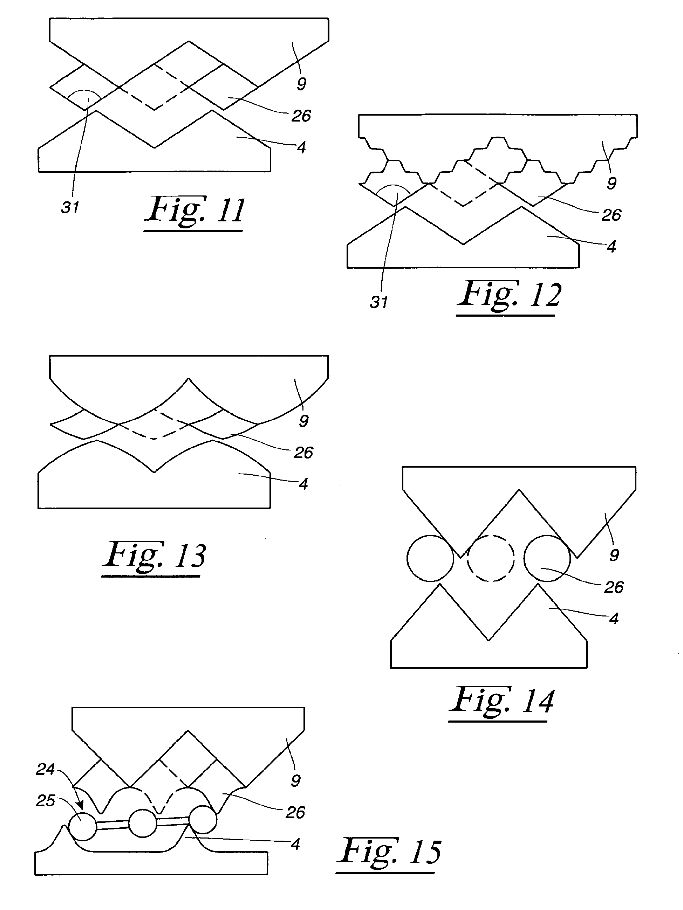

Die Figur 11 zeigt eine erste alternative Ausführungsform des Getriebes 1 mit einem von 90° abweichenden Flankenwinkel 31 der Steuerzähne 26. Die Funktionalität des Getriebes bleibt hiervon unbeeinflußt. Es ist lediglich zweckmäßig, auch die Flankenwinkel der ersten Zähne 21 des ersten Zahnrades 4 und der zweiten Zähne 22 des zweiten Zahnrades 9 entsprechend an den Flankenwinkel 31 anzupassen. Durch Wahl des Flankenwinkels 31 kann die Grundübersetzung des Getriebes 1 beeinflußt werden, so daß beispielsweise das Getriebe 1 in der Extremstellung der Steuerung gemäß den Figuren 3 bis 5 eine Übersetzung von 2:1 aufweist. Damit kann ein nicht einstellbares Vorgetriebe zur Anpassung des Drehzahlverhältnisses zwischen Motor und Last entfallen.

Die Figur 12 zeigt eine weitere alternative Ausführungsform mit verzahnungsunterstützten Zahnflanken 28 des zweiten Zahnrades 9. Insbesondere bei stumpfen Flankenwinkeln 31 wird auf diese Weise eine ungewollte Verschiebung der Steuerzähne 26 beim Auftreffen auf die aktive Flanke 30 verhindert.

Die Figur 13 zeigt eine weitere alternative Ausführungsform, bei der die Flanken der Steuerzähne 26 gewölbt sind. Entsprechend weisen die ersten Zähne 21 des ersten Zahnrades 4 und die zweiten Zähne 22 des zweiten Zahnrades 9 ebenfalls entsprechend gewölbte Zahnflanken auf. Durch diese Wölbung der Zahnflanken wird erreicht, daß die Steuerkurve zwischen der Tangentiallage der Steuerzähne 26 und dem Übersetzungsverhältnis des Getriebes 1 nicht linear wird. Die Steuerkurve wird insbesondere im Bereich um die Neutralstellung gedehnt und im Bereich um die Endlage gestaucht. Damit kann im Bereich kleinerer Übersetzungsverhältnisse eine präzise Einstellung des Getriebes erfolgen, ohne gleichzeitig den Bereich der verfügbaren Übersetzungen einzuschränken.

Durch die Wölbung der Zahnflanken ergibt sich noch der zusätzliche Effekt, daß sich die Steuerzähne 26 je nach Lage zwischen den zweiten Zähnen 22 des zweiten Zahnrades 9 verkippen. Damit verändert sich zusätzlich der Flankenwinkel der Steuerzähne 26, wodurch sich die Nichtlinearität der Übertragungskurve des Getriebes 1 noch weiter verstärkt.

Die Figur 14 zeigt eine weitere alternative Ausführungsform mit Wälzkörpern als Steuerzähne 26. Diese Ausführungsform hat den Vorteil, daß keinerlei gleitende Bewegung zwischen den Zähnen 21, 26, 22 erfolgt, was zu einer verschleißarmen Getriebeausführung führt. Es müssen auch keine zusätzlichen Wälzlager vorgesehen werden, da diese Funktion bereits direkt von den Steuerzähnen 26 übernommen wird.

Die Figur 15 zeigt eine weitere alternative Ausführungsform mit gesondertem Wälzlager 24. Diese Ausführungsform entspricht im wesentlichen der Figur 2, wobei hier die Form der Steuerzähne 26 zur Erzielung einer reinen Wälzbewegung deutlich hervorgeht. Die Steuerzähne 26 sind im Teilbereich konkav gekrümmt, wobei ihr Krümmungsradius dem Doppelten des Radius der Wälzkörper 25 entspricht.

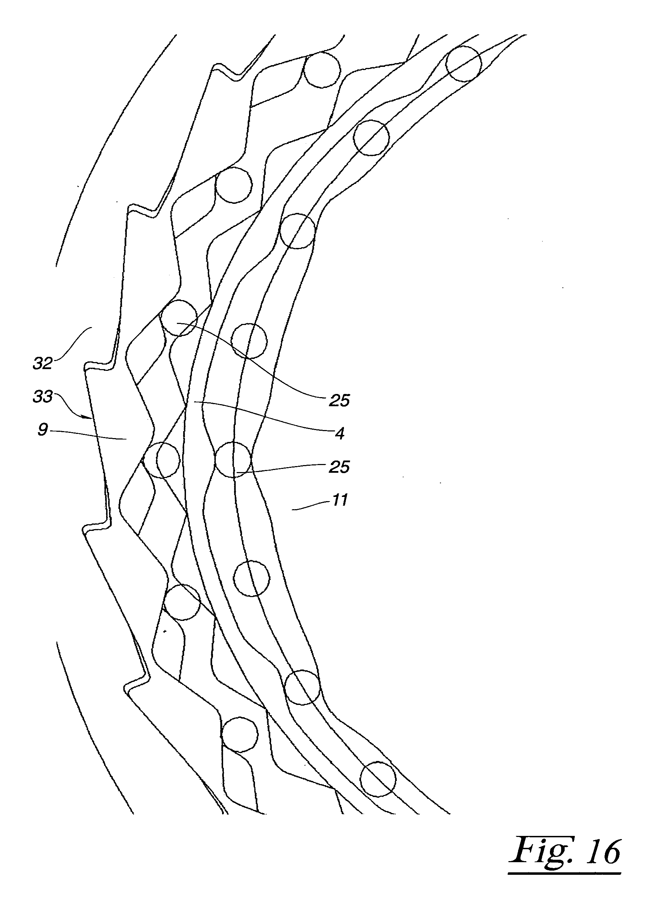

Schließlich zeigt die Figur 16 eine weitere alternative Ausführungsform des Getriebes 1, wobei gleiche Bezugszeichen wiederum gleiche Teile benennen. Bei dieser Ausführungsform ist das zweite Zahnrad 9 auf einem Stützrad 32 abgestützt. Das Stützrad 32 ist dabei gegenüber dem zweiten Zahnrad 9 verdrehbar. Beide Räder 32, 9 berühren sich an Eingriffsflächen 33, die sägezahnförmig ausgebildet sind. Durch Verdrehen des Stützrades 32 relativ zum zweiten Zahnrad 9 im Uhrzeigersinn wird das zweite Zahnrad 9 gegen das Stützrad 32 verspannt. Auf diese Weise nimmt die Elastizität des zweiten Zahnrads 9 ab. Damit verändert sich der vom zweiten Zahnrad 9 erzielbare radiale Hub, was wiederum das Übersetzungsverhältnis des Getriebes 1 verändert.

Damit kann durch Verdrehen des Stützrades 32 mittelbar über die damit verbundene Änderung der Elastizität des zweiten Zahnrades 9 das Übersetzungsverhältnis des Getriebes 1 eingestellt werden. Insbesondere ist daran gedacht, diese Maßnahme mit den verstellbaren Steuerzähnen 26 gemäß dem vorgenannten Ausführungsbeispiel zu kombinieren.

### Bezugszeichenliste

- 1: Getriebe
- 2: Gehäuse
- 3: Wälzlager
- 4: erstes Zahnrad
- 5: flexible Ankopplung
- 6: Antriebswelle
- 7: Verbindungsmuffe
- 8: Ausgang
- 9: zweites Zahnrad
- 10: flexible Ankopplung
- 11: drittes Zahnrad
- 12: Antriebswelle
- 13: Verbindungsmuffe
- 14: Eingang
- 15: drittes Zahnrad
- 16: Achse
- 17: vierter Zahn
- 18: Kongruenzpunkt
- 19: Wälzlager
- 20: Wälzkörper
- 21: erster Zahn
- 22: zweiter Zahn
- 23: Kongruenzpunkt
- 24: Wälzlager
- 25: Wälzkörper
- 26: Steuerzahn
- 26a: Steuerkranz
- 26b: Steuerhebel
- 27: Feder
- 28: Zahnflanke
- 29: passive Flanke
- 30: aktive Flanke
- 31: Flankenwinkel
- 32: Stützrad
- 33: Eingriffsfläche

## Patentansprüche

1. Getriebe zur Umsetzung von Bewegungen, wobei das Getriebe (1) mindestens ein erstes, elastisch verformbares Zahnrad (4) aufweist, welches radiale, oszillatorische Bewegungen ausführen kann und welches erste Zähne (21) aufweist, die mit zweiten Zähnen (22) eines zweiten Zahnrades (9) kämmen, **dadurch gekennzeichnet, daß** an den zweiten Zähnen (22) Steuerzähne (26) verstellbar abgestützt sind, um das Übersetzungsverhältnis des Getriebes (1) einzustellen..

2. Getriebe nach Anspruch 1 oder nach dem Oberbegriff des Anspruchs 1, **dadurch gekennzeichnet, daß** das zweite Zahnrad (9) an einem Stützrad (32) über nicht rotationssymmetrische Eingriffsflächen (33) abgestützt ist, welches relativ zum zweiten Zahnrad (9) verdrehbar ist, um das Übersetzungsverhältnis des Getriebes (1) einzustellen.

3. Getriebe nach Anspruch 2, **dadurch gekennzeichnet, daß** die Eingriffsflächen (33) sägezahnförmig ausgebildet sind.

4. Getriebe nach Anspruch 1, **dadurch gekennzeichnet, daß** die Steuerzähne (26) in Drehrichtung verstellbar sind.

5. Getriebe nach Anspruch 1 oder 4, **dadurch gekennzeichnet, daß** die Steuerzähne (26) verschwenkbar sind.

6. Getriebe nach mindestens einem der Ansprüche 1 bis 5, **dadurch gekennzeichnet, daß** das erste Zahnrad (4) an der den ersten Zähnen (21) gegenüberliegenden Seite vierte Zähne(17) aufweist, die mit dritten Zähnen (15) eines dritten Zahnrades (11) kämmen, welches eine Drehbewegung in die oszillatorische Bewegung umwandelt oder umgekehrt.

7. Getriebe nach mindestens einem der Ansprüche 1 bis 6, **dadurch gekennzeichnet, daß** zwischen den Zähnen (21, 22, 15, 17) und/oder Steuerzähnen (26) mindestens ein Wälzlager (19, 24) vorgesehen ist, welches Wälzkörper (20, 25) aufweist.

8. Getriebe nach mindestens einem der Ansprüche 1 und 4 bis 7, **dadurch gekennzeichnet, daß** die Steuerzähne (26) von Wälzkörpern (20) mindestens eines Wälzlagers (19) gebildet sind.

9. Getriebe nach Anspruch 7 oder 8, **dadurch gekennzeichnet, daß** die Steuerzähne (26) an der dem Wälzlager (19) zugewandten Seite eine Kontur aufweisen, welche wenigstens im Teilbereich konkav ist, wobei ein Krümmungsradius der konkaven Kontur, vorzugsweise dem doppelten des Krümmungsradius der Wälzkörper (20) mit einer Toleranz von +/- 20 % entspricht.

10. Getriebe nach mindestens einem der Ansprüche 1 und 4 bis 7, **dadurch gekennzeichnet, daß** die Steuerzähne (26) an der dem zweiten Zahnrad (9) zugewandten Seite passend zur Kontur der zweiten Zähne (22) des zweiten Zahnrades (9) ausgebildet sind.

11. Getriebe nach Anspruch 10, **dadurch gekennzeichnet, daß** die Steuerzähne (26) an der Kontur der zweiten Zähne (22) des zweiten Zahnrades (9) gleitbar oder wälzbar abgestützt sind.

12. Getriebe nach mindestens einem der Ansprüche 1 und 4 bis 11, **dadurch gekennzeichnet, daß** die Steuerzähne (26) radial federnd gelagert sind.

13. Getriebe nach mindestens einem der Ansprüche 1 und 4 bis 12, **dadurch gekennzeichnet, daß** die dem zweiten Zahnrad (9) zugewandten Flächen der Steuerzähne (26) einen Flankenwinkel (31) einschließen, der dem Winkel zwischen den Zahnflanken (18) der zweiten Zähne (22) des zweiten Zahnrades (9) entspricht.

14. Getriebe nach Anspruch 13, **dadurch gekennzeichnet, daß** die dem zweiten Zahnrad (9) zugewandten Flächen der Steuerzähne (26) rechte Winkel einschließen.

15. Getriebe nach mindestens einem der Ansprüche 1 bis 14, **dadurch gekennzeichnet, daß** mindestens eines der Zahnräder (4, 9, 11) einen unendlichen Krümmungsradius aufweist und als Zahnstange ausgebildet ist.
